# EUROPEAN PATENT APPLICATION

(11) **EP 4 292 434 A1**
(43) Date of publication of application: **20.12.2023**
(21) Application number: 23178215.2
(22) Date of filing: 08.06.2023
(51) Int. Cl.: A21C 5/00, A21C 9/04, A21D 13/11, A21D 13/22, A21D 13/47, A21D 13/80

(54) **METHOD FOR PRODUCING A BISCUIT**

(30) Priority: 14.06.2022 IT 202200012578
(71) Applicant: SOREMARTEC S.A., 2633 Senningerberg (LU)
(72) Inventor: ARAGONE, Giovanni, 2633 Senningerberg (LU); MOLLO, Marco, 2633 Senningerberg (LU); ZUNINO, Tiziano, 2633 Senningerberg (LU)
(74) Representative: Frontoni, Stefano

(57) **Abstract**

A method for producing a biscuit (100), comprising:
- preparing a first biscuit dough;
- forming with the first biscuit dough a biscuit body (101);
- preparing a second biscuit dough, where the second biscuit dough is liquid;
- spraying the second, liquid, biscuit dough on a top surface (101A) of the biscuit body to form an outer biscuit layer (102) that coats the surface (101A) of the biscuit body (101) according to a predefined motif; and
- baking the biscuit body (101) and the outer biscuit layer (102).

## Description

The present invention relates to a method for producing a biscuit.

In particular, the method described herein has the purpose of providing a biscuit having a decorative motif on a surface thereof.

Already known in the art are various processes for decorating biscuits. For instance, it is known to use food inks for reproducing via a printing process any graphic representation on an outer surface of a biscuit, in a way similar to printing processes carried out on non-foodstuff substrates.

Also known are processes for decorating a biscuit that envisage forming one or more auxiliary bodies using a second biscuit dough that are then applied on a surface of the biscuit to provide a decorative motif. The document WO2018/096420 describes a process of this type.

With reference to the prior art cited above, it is pointed out that the use of food inks presents the disadvantage of introducing into the recipe of the biscuit substances that may alter the organoleptic properties of the biscuit or characterize the list of ingredients with the presence of additives such as colorants. Moreover, the food ink used must have a composition developed for being compatible with that of the biscuit so as to be able to adhere stably thereto in order to prevent any detachment or flaking of the food ink from the biscuit.

The solution of using a second biscuit dough requires, instead, an elaborate and complex process for providing the aforesaid auxiliary bodies and for handling them in order to apply them on the surface of the biscuit.

In this context, the object of the present invention is to provide a method for producing a biscuit that will overcome the drawbacks of the prior art referred to above.

The above object is achieved thanks to a method according to claim 1. The present invention moreover regards a biscuit according to claim 11.

Further characteristics and advantages of the present invention will emerge clearly from the ensuing description with reference to the annexed drawings, which are provided purely by way of non-limiting example and in which:
- Figure 1 is a schematic illustration of an example of the method described herein;
- Figure 2 represents an example of biscuit obtained via the method described herein; and
- Figure 3 represents an example of apparatus for carrying out the spraying step of the method described herein.

In the ensuing description various specific details are illustrated aimed at enabling an in-depth understanding of the embodiments. The embodiments may be obtained without one or more of the specific details, or with other methods, components, or materials, etc. In other cases, known structures, materials, or operations are not illustrated or described in detail so that various aspects of the embodiment will not be obscured.

The references used herein are only for convenience and hence do not define the sphere of protection or the scope of the embodiments.

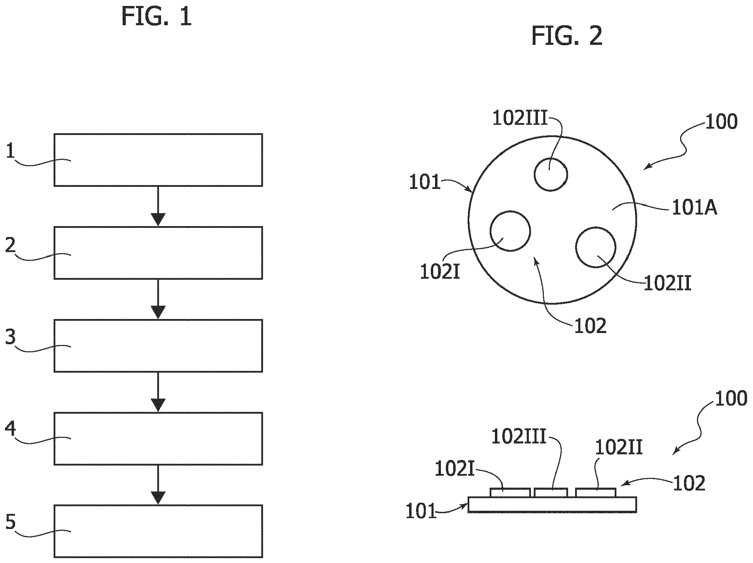

With reference to Figure 1, in general the method described herein for producing a biscuit comprises:
- preparing a first biscuit dough (step 1);
- forming with the first biscuit dough a biscuit body (step 2);
- preparing a second biscuit dough, wherein the second biscuit dough is liquid (step 3);
- spraying the second, liquid, biscuit dough on a surface of the biscuit body to form an outer biscuit layer that coats the surface of the biscuit body according to a predefined motif (step 4); and
- baking the biscuit body and the outer biscuit layer (step 5).

The first biscuit dough may be a common dough for making biscuits.

Generally, a dough for biscuits comprises water (e.g., in a weight percentage comprised in the range between 5 wt% and 25 wt%), flour (e.g., in a weight percentage comprised in the range between 30 wt% and 80 wt%), possibly leavening agents (e.g., in a weight percentage comprised in the range between 0.1 wt% and 6 wt%), sugar and/or other sweetening substances, for example glucose syrup (e.g., in a weight percentage comprised in the range between 5 wt% and 35 wt%), and, finally, butter or else vegetable fat (e.g., in a weight percentage comprised in the range between 5 wt% and 40 wt%). To these typical basic ingredients, there may then be added further ingredients, such as cocoa, hazelnuts, etc.

More in particular, the dough may be either a dough for dry biscuits or a dough for shortbread biscuits.

By way of example, out of 100 kg of flour:
- a dough for dry biscuits may comprise from 5 to 12 kg of fats and from 14 to 40 kg of water; whereas
- a dough for shortbread biscuits may comprise from 15 to 25 kg of fats and from 14 to 18 kg of water.

Preferably, the second biscuit dough comprises water in a weight percentage of between 30 wt% and 50 wt%, preferably 40 wt%, flour in a weight percentage of between 10 wt% and 20 wt%, preferably 15 wt%, and sugar in a weight percentage of between 15 wt% and 20 wt%, preferably 18 wt%. Moreover, preferably, the second biscuit dough comprises fats in a weight percentage of between 2 wt% and 7 wt%, preferably 5 wt%.

As referred to above, the second biscuit dough is used to form an outer biscuit layer shaped so as to reproduce a predefined decorative motif.

The outer biscuit layer may be a continuous layer, the perimetral border of which reproduces a predefined shape corresponding to a given decorative motif, or else may present multiple portions separate from one another, the contours of which have predefined shapes and which form as a whole a given decorative motif.

Preferably, the outer biscuit layer has a thickness smaller than or equal to 1 mm, even more preferably comprised between 0.3 mm and 1 mm, for example 0.5 mm.

Preferably, the second, liquid, biscuit dough, which forms the outer biscuit layer, has a viscosity of at least 1700 centipoise, preferably between 1900 and 5000 centipoise. In this connection, the present applicant has been able to note that, thanks to such a value of viscosity, the second biscuit dough applied via spraying on the surface of the biscuit body is able to maintain its predefined contour over the time that elapses between the end of the spraying step and completion of the baking step, without any risk of the second, liquid, dough possibly shifting and extending beyond the aforesaid predefined contour.

The method described herein envisages just one baking step and simultaneous baking of the first and second biscuit doughs. During this step, the liquid component of the second biscuit dough will evaporate practically completely, enabling the outer biscuit layer to solidify and bind stably to the biscuit body.

Preferably, the baking step is obtained so that the percentage of moisture in the outer biscuit layer will be below 3.5 wt% at the end of the baking step.

The present applicant has been able to note experimentally that baking processes characterized by a loading of the oven lower than 15 kg/(h·m²) (a value that is, instead, amply exceeded in traditional processes for baking shortbread biscuits) yield the best results with reference to characteristics of the outer biscuit layer such as integrity, homogeneity, and adhesion to the underlying biscuit body 101.

Figure 2 illustrates an example of biscuit 100 obtained via the method described herein.

The body 101 of the biscuit 100 has a top outer surface 101A, applied on which is the outer biscuit layer 102 in the form of three distinct areas 102I, 102II and 102III that create as a whole a given decorative motif.

In one or more preferred embodiments, the step of spraying of the second, liquid, biscuit dough is carried out using a spraying apparatus that comprises a membrane pump and one or more nozzles for nebulizing the second biscuit dough and providing a jet of the nebulized second biscuit dough directed against the surface of the biscuit body. The membrane pump feeds the second biscuit dough under pressure to the nebulization nozzles. Preferably, the second, liquid, dough is supplied at a pressure of between 15 and 40 bar, more preferably 30 bar.

Moreover, preferably, the step of spraying of the second biscuit dough envisages the use of a shaped mask that is configured to be set between the nebulization nozzle and the biscuit body so as to expose to the jet of the second biscuit dough only a predefined area of the surface of the biscuit body. In this way, the second biscuit dough is applied on the surface of the biscuit body within the perimeter of the aforesaid area, and the outer biscuit layer hence assumes a predefined contour corresponding to the perimeter of the aforesaid area.

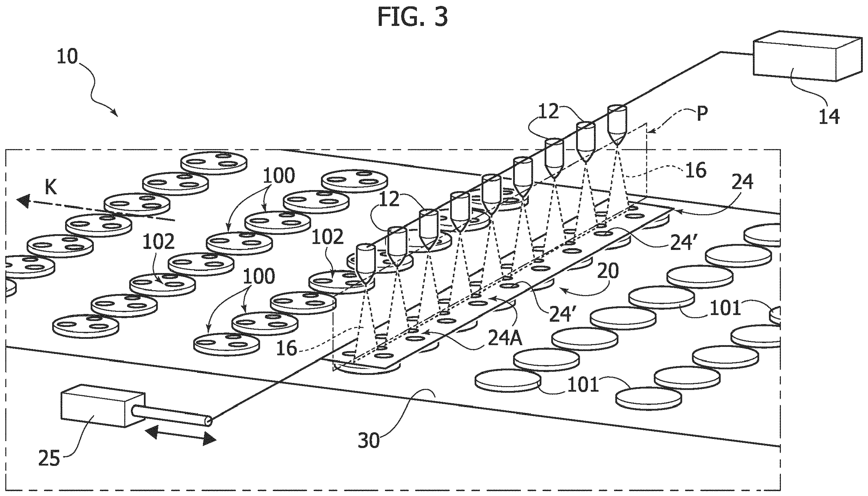

Figure 3 represents an example of apparatus for performing the spraying step.

In one or more preferred embodiments, like the one illustrated, the above apparatus, designated as a whole by the reference number 10, comprises a conveyor 30 configured to feed the biscuit bodies 101 in a direction of advance K.

The biscuit bodies 101 are arranged on the conveyor 30 according to a succession, in the direction of advance K, of orderly rows of biscuit bodies 101, parallel to a direction T transverse to the direction of advance K. In one or more preferred embodiments, like the one illustrated, the apparatus 10 further comprises a series of nozzles 12 aligned with respect to one another in the direction T, which are supplied with the second, liquid, biscuit dough by a membrane pump 14. The nozzles 12 are, preferably, atomizer nozzles for nebulizing the second, liquid, biscuit dough.

In addition, in one or more preferred embodiments, like the one illustrated, the apparatus 10 comprises a mask 20, constituted by a metal plate 24, provided on which is an orderly row of shaped openings 24A parallel to the direction T and which is set between the conveyor 30 and the series of nozzles 12. In this way, the jet of the second biscuit dough dispensed by the nozzles 12 must necessarily pass through the openings 24A in the mask 20, before depositing on the top surface 101A of the biscuit bodies 101 that lie on the conveyor 30. The openings 24A are delimited by an inner edge 24' of predefined profile and can be designed to operate on the surface of a biscuit body individually or else in subgroups.

In view of the foregoing, the mask 20 hence constitutes the aforesaid shaped mask designed to expose a predefined area of the surface of the individual biscuit body to the jet of the second biscuit dough so as to endow the outer biscuit layer that is formed by the second biscuit dough with a predefined corresponding contour.

In particular, in the example illustrated, the mask 20 is configured to operate simultaneously on all the biscuit bodies 101 of each row of biscuit bodies 101 that lies on the conveyor 30.

Preferably, the mask 20 is driven via an actuator 25 according to a movement of tracking of the biscuit bodies 101 in the direction of advance K so that the second biscuit dough will be deposited on their top surface in a pre-set position in the direction of advance K, whilst the biscuit bodies 101 continue to advance on the conveyor 30. Once again to guarantee that the second biscuit dough is deposited in a pre-set position of the top surface of the biscuit bodies 101, the latter are also arranged, on the conveyor 30, in a pre-set way in the direction T.

As illustrated in Figure 3, the nozzles 12 are configured to create a jet 16 having a substantially planar conformation - in the example illustrated defining a generic plane P orthogonal to the metal plate 24 - and defining a triangle with an internal angle θ preferably comprised between 10° and 40°. As illustrated in Figure 3, the single jet 16 of the second biscuit dough may be configured to operate on a number of openings 24A of one and the same row.

In one or more preferred embodiments, the single nozzle 12 has a dispensing hole having a diameter of less than 0.5 mm, even more preferably less than 0.3 mm. The present applicant has been able to note that such small diameters enable nebulization of the second biscuit dough into droplets of a size having the same order of magnitude, and it is thus possible to obtain well-defined contours of the decorations on the outer biscuit layer with tolerances of below 0.5 mm.

As mentioned above, preferably the step of spraying the second, liquid, biscuit dough is configured for obtaining an outer layer having a thickness of less than 1 mm, preferably 0.5 mm. The person skilled in the sector will understand that adjustment of the thickness of the outer layer may be obtained by varying the rate of advance of the biscuit bodies in the direction K and/or by varying the flowrate of the jet of the second dough dispensed by the nozzles 12. The correct setting of these operating parameters to obtain a given thickness may be sought empirically, through various tests conducted on the apparatus.

Of course, without prejudice to the principle of the invention, the details of construction and the embodiments may vary, even significantly, with respect to what has been illustrated herein purely by way of non-limiting example, without thereby departing from the scope of the invention, as defined by the annexed claims.

## Claims

1. A method for producing a biscuit (100), comprising:
- preparing a first biscuit dough;
- forming with the first biscuit dough a biscuit body (101);
- preparing a second biscuit dough, wherein the second biscuit dough is liquid;
- spraying the second, liquid, biscuit dough on a top surface (101A) of the biscuit body to form an outer biscuit layer (102) that coats the surface (101A) of the biscuit body (101) according to a predefined motif; and
- baking the biscuit body (101) and the outer biscuit layer (102).

2. The method according to claim 1, wherein said outer biscuit layer (102) has a thickness smaller than or equal to 1 mm, preferably comprised between 0.3 mm and 1 mm.

3. The method according to claim 1 or claim 2, wherein said second, liquid, biscuit dough has a viscosity of at least 1700 centipoise, preferably between 1900 and 5000 centipoise.

4. The method according to any one of the preceding claims, wherein said second biscuit dough comprises water in a weight percentage of between 30 wt% and 50 wt%, preferably 40 wt%, flour in a weight percentage of between 10 wt% and 20 wt%, preferably 15 wt%, and sugar in a weight percentage of between 15 wt% and 20 wt%, preferably 18 wt%.

5. The method according to claim 4, wherein said second biscuit dough comprises fats in a weight percentage of between 2 wt% and 7 wt%, preferably 5 wt%.

6. The method according to any one of the preceding claims, wherein said spraying step includes, via at least one atomizer nozzle (12), creating a jet (16) of nebulized second biscuit dough directed against the surface (101A) of the biscuit body (101).

7. The method according to claim 6, wherein said second, liquid, biscuit dough is supplied under pressure to the atomizer nozzle (12) via a membrane pump (14), preferably at a pressure comprised between 15 and 40 bar.

8. The method according to claim 7, wherein said second, liquid, biscuit dough is dispensed by said atomizer nozzle (12) through a hole of said nozzle having a diameter of less than 0.5 mm, even more preferably less than 0.3 mm.

9. The method according to claim 6, wherein said jet (16) of second nebulized biscuit dough has a substantially planar conformation with a triangular profile.

10. The method according to claim 6, wherein said spraying step envisages the use of a shaped mask (20) that is set between the nozzle (12) and the surface (101A) of the biscuit body (101) so as to expose only a predefined area of the surface (101A) of the biscuit body (101) to the jet of the second biscuit dough.

11. A biscuit (100) obtained via a method according to any one of the preceding claims, comprising a biscuit body (101) and an outer biscuit layer (102) that coats a top surface (101A) of the biscuit body (101) according to a predefined motif.

12. The biscuit according to claim 11, wherein said outer biscuit layer (102) has a thickness smaller than or equal to 1 mm, even more preferably comprised between 0.3 mm and 1 mm.
